# EUROPEAN PATENT APPLICATION

(11) **EP 3 505 894 A1**
(43) Date of publication of application: **03.07.2019**
(21) Application number: 18215650.5
(22) Date of filing: 21.12.2018
(51) Int. Cl.: G01L 3/10

(54) **TORQUE SENSOR**

(30) Priority: 28.12.2017 JP 2017254168
(71) Applicant: Melexis Technologies SA, 2022 Bevaix (CH)
(72) Inventor: YOSHIYA, Takumi, Tokyo, 151-0053 (JP)
(74) Representative: DenK iP

(57) **Abstract**

The present invention relates to a torque sensor (1) comprising:
- a multipolar magnet (110) rotated with a first shaft (20);
- a pair of magnetic yokes (120,121) rotated together with a second shaft (21) connected to said first shaft (20) via a torsion bar (22) and disposed in a magnetic field of said multipolar magnet,
- a pair of magnetism collectors (13,14) having a pair of magnetism collector bodies (13a,14a) to collect lines of magnetic field of said pair of magnetic yokes respectively and having a pair of protrusions (13b,14b) that each extend from the pair of magnetism collector bodies to form a gap, said gap having an axis comprising said centre point and being in a direction wherein said gap between said pair of protrusions is smallest and
- a magnetic detection unit (10) disposed so as to face the gap between the pair of protrusions, a normal line to said magnetic detection unit being in a radial direction of said gap axis, and so as not to overlap the pair of protrusions in a plane, wherein a normal line of said plane is in the direction of said gap axis, said magnetic detection unit (10) arranged to detect a magnetic flux related to said pair of magnetic yokes between the pair of protrusions, while aiming at making a normal line of a detection surface coincide with the radial direction of said gap axis, said magnetic detection unit having magnetic detection directions of at least a normal direction of the detection surface and a direction perpendicular to the normal direction of the detection surface, and outputting a signal corresponding to a magnetic flux density obtained by determining a ratio according to an angle of deviation between the radial direction of said gap axis and the normal direction of the detection surface, and by subtracting a value obtained by multiplying a detection magnetic flux density in the normal direction of the detection surface by the ratio, from a detection magnetic flux density in the direction of said gap axis.

## Description

### Field of the invention

The present invention is generally related to the field of torque sensors.

### Background of the invention

As a conventional technique, a torque sensor for detecting a torque applied to a steering shaft by using a magnet and a magnetic sensor has been proposed, for example in JP 2012-237728 A.

The torque sensor disclosed in JP 2012-237728 A is provided at a connecting portion between a steering shaft connected with a steering wheel operated by a driver and a column shaft connected with the steering shaft through a torsion bar. The torque sensor includes a cylindrical multipolar magnet connected to a steering shaft, a pair of magnetic yokes disposed within the magnetic field of the multipolar magnet and integrally rotated with the column shaft, a pair of magnetism collecting elements magnetically coupled to the pair of magnetic yokes, and a Hall IC for detecting a magnetic flux density. The torque sensor detects a torque applied to the steering shaft by means of arrangement of a Hall IC between protrusions provided in each of the pair of magnetism collecting elements and detection of the magnetic flux density between the pair of magnetic yokes. It exploits the fact that when the torsion bar is twisted and deformed according to the torque applied to the steering shaft, the relative position between the multipolar magnet and the pair of magnetic yokes changes so that the magnetic flux density generated between the pair of magnetic yokes changes. Information on the detected torque is sent to an electric control unit (ECU). The ECU sends a signal for controlling the assisting force applied to the column shaft to an assist mechanism that is connected to the column shaft and assists the driver's steering.

Also other torque sensors for detecting the torque applied to the steering shaft by a magnet and a magnetic sensor similar to the above have been proposed (for example, see EP2957882, US2016/0153850 and US2016/015849).

The torque sensor disclosed in EP2957882, US2016/0153850 and US2016/015849 is provided with a notch on the substrate and the protrusion of the magnetism collecting element is arranged in the space formed by the notch, whereby the distance between the protrusions of the magnetism collecting elements is set to the thickness of the Hall IC. The Hall plate of the Hall IC is disposed between the protrusions of the magnetism collecting elements whose interval has been narrowed so that the magnetic flux density between the pair of magnetic yokes is detected more greatly and the distance between protrusions of the magnetism collecting elements is made substantially equal to the distance, thereby maximizing the magnetic flux density to be detected.

However, the torque sensors described in the above-mentioned prior art documents each generate a magnetic flux in the axial direction of the steering shaft between the protrusions by using the magnetism collecting element that collects the magnetic flux of the cylindrical multipolar magnet. They each also generate leakage flux in the radial direction of the steering shaft from the cylindrical multipolar magnet. When the Hall IC is ideally arranged because the magnetism sensing direction of the Hall IC is perpendicular to the leakage flux, no problem occurs. However, if there is a placement error of the Hall IC, the torque sensors detect the leakage flux, and thus, as a result, the detection sensitivity is lowered.

### Summary of the invention

It is an object of embodiments of the present invention to provide a torque sensor that reduces or suppresses the influence of a placement error of a magnetic detection element on the detection sensitivity.

The above objective is accomplished by the solution according to the present invention.

In a first aspect the invention relates to a torque sensor in order to achieve the above object, said torque sensor including
- a multipolar magnet rotated with a first shaft;
- a pair of magnetic yokes rotated together with a second shaft connected to the first shaft via a torsion bar and disposed in a magnetic field of the multipolar magnet;
- a pair of magnetism collector having a pair of magnetism collector bodies that collect magnetic field lines of the pair of magnetic yokes respectively and having a pair of protrusions that each extend in an axial direction of the first shaft from each of the pair of magnetism collector bodies to form a gap; and
- a magnetic detection unit which is disposed so as to face the gap between the pair of protrusions in a plane view, a normal line of the plane being in a radial direction of the first shaft, and so as not to overlap the pair of protrusions in a plane view, a normal line of the plane being in an axial direction of the first shaft, to detect a magnetic flux in the gap between the pair of protrusions, while aiming at making a normal line of a detection surface coincide with the radial direction of the first shaft, and which has magnetic detection directions of at least a normal direction of the detection surface and a direction perpendicular to the normal direction of the detection surface, and which outputs a signal corresponding to a magnetic flux density obtained by determining a ratio according to an angle of deviation between the radial direction of the first shaft and the normal direction of the detection surface, and by subtracting a value obtained by multiplying a detection magnetic flux density in the normal direction of the detection surface by the ratio, from a detection magnetic flux density in the axial direction of the first shaft.

The proposed solution indeed allows for suppressing the influence of the placement error of the magnetic detection element on the detection sensitivity.

In a preferred embodiment the torque sensor comprises a pair of magnetism collectors having a pair of magnetism collector bodies to collect lines of magnetic field of the pair of magnetic yokes respectively and having a pair of protrusions that each extend from the pair of magnetism collector bodies to form a gap, said gap having an axis comprising the centre point and being in a direction wherein the gap between the pair of protrusions is smallest and a magnetic detection unit disposed so as to face the gap between the pair of protrusions, a normal line to said magnetic detection unit being in a radial direction of said gap axis, and so as not to overlap the pair of protrusions in a plane, wherein a normal line of said plane is in the direction of said gap axis, said magnetic detection unit arranged to detect a magnetic flux related to said pair of magnetic yokes between the pair of protrusions, while aiming at making a normal line of a detection surface coincide with the radial direction of said gap axis, said magnetic detection unit having magnetic detection directions of at least a normal direction of the detection surface and a direction perpendicular to the normal direction of the detection surface, and outputting a signal corresponding to a magnetic flux density obtained by determining a ratio according to an angle of deviation between the radial direction of said gap axis and the normal direction of the detection surface, and by subtracting a value obtained by multiplying a detection magnetic flux density in the normal direction of the detection surface by the ratio, from a detection magnetic flux density in the direction of said gap axis.

In a preferred embodiment the magnetic detection unit includes at least a pair of Hall plates arranged at an interval in the axial direction of the first shaft, and a magnetic concentrator provided between the pair of Hall plates so as to overlap a part of each of the pair of Hall plates in a plane view in the normal direction of the detection surface.

Advantageously, the magnetic detection unit includes at least a pair of Hall plates arranged side by side in the axial direction of the first shaft, and a magnetic concentrator provided at each end of the pair of Hall plates in the axial direction of the first shaft so as to overlap a part of each of the pair of Hall plates in a plane view in the normal direction of the detection surface.

In a preferred embodiment the multipolar magnet has S-poles and N-poles alternately arranged at a predetermined pitch in a circumferential direction of the first shaft, and the pair of magnetic yokes are arranged to be shifted from each other in the circumferential direction by the predetermined pitch.

In another aspect the invention relates to a torque sensor including:
- a multipolar magnet rotated with a first shaft;
- a pair of magnetic yokes rotated together with a second shaft connected to the first shaft via a torsion bar and disposed in a magnetic field of the multipolar magnet;
- a pair of magnetism collector having a pair of magnetism collector bodies that collect lines of magnetic force of the pair of magnetic yokes respectively and having a pair of protrusions that each extend in parallel with a radial direction of the first shaft from each of the pair of the magnetism collector bodies to form a space; and
- a magnetic detection unit which is disposed in the space between the pair of protrusions and so as to overlap the pair of protrusions in a plane view to detect a magnetic flux in the space between the pair of protrusions, a normal line of the plane being in an axial direction of the first shaft, while aiming at making a normal line of a detection surface coincide with the axial direction of the first shaft, and which has magnetic detection directions of at least a normal direction of the detection surface and a direction perpendicular to the normal direction of the detection surface, and which outputs a signal corresponding to a magnetic flux density obtained by determining a ratio according to an angle of deviation between the radial direction of the first shaft and the direction perpendicular to the normal direction of the detection surface, and by subtracting a value obtained by multiplying a detection magnetic flux density in the direction perpendicular to the normal direction of the detection surface by the ratio, from a detection magnetic flux density in the axial direction of the first shaft.

In a preferred embodiment the torque sensor comprises a pair of magnetism collectors having a pair of magnetism collector bodies that collect lines of magnetic field of the pair of magnetic yokes respectively and having a pair of protrusions that each extend from each of the pair of the magnetism collector bodies to form a space; said space having an axis comprising a centre point of said space and being in a direction normal to the direction wherein said space between said pair of protrusions is smallest, said pair of protrusions extending in parallel with said axis of said space and a magnetic detection unit disposed in the space between the pair of protrusions and so as to overlap the pair of protrusions in a plane view to detect a magnetic flux in the space between the pair of protrusions, a normal line of the plane being in said direction wherein said space between said pair of protrusions is smallest, while aiming at making a normal line of a detection surface coincide with said direction wherein said space between said pair of protrusions is smallest t, and having magnetic detection directions of at least a normal direction of the detection surface and a direction perpendicular to the normal direction of the detection surface, and outputting a signal corresponding to a magnetic flux density obtained by determining a ratio according to an angle of deviation between the direction of said axis of said space and the direction perpendicular to the normal direction of the detection surface, and by subtracting a value obtained by multiplying a detection magnetic flux density in the direction perpendicular to the normal direction of the detection surface by the ratio, from a detection magnetic flux density in said direction wherein said space between said pair of protrusions is smallest.

Preferably the magnetic detection unit includes at least a pair of Hall plates arranged at an interval in the radial direction of the first shaft, and a magnetic concentrator provided between the pair of Hall plates so as to overlap a part of each of the pair of Hall plates in a plane view in the normal direction of the detection surface.

In one embodiment the magnetic detection unit includes at least a pair of Hall plates arranged side by side in the radial direction of the first shaft, and a magnetic concentrator provided at each end of the pair of Hall plates in the axial direction of the first shaft so as to overlap a part of each of the pair of Hall plates in a plane view in the normal direction of the detection surface.

In another embodiment the multipolar magnet has S-poles and N-poles alternately arranged at a predetermined pitch in a circumferential direction of the first shaft, and the pair of magnetic yokes are arranged to be shifted from each other by the predetermined pitch in the circumferential direction.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 represents a schematic diagram showing a configuration example of a steering system according to a first embodiment.
Fig.2 is an exploded perspective view showing a configuration example of a torque sensor according to the first embodiment.
Fig.3 illustrates a cross-sectional view taken along a cross section passing through a central axis of a steering shaft, which shows a structural example of the torque sensor.
Fig.4(a) to 4(c) provide front views showing positional relationships between a pair of magnetic yokes and S-poles and N-poles of a multipolar magnet 110.
Fig.5(a) to 5(c) illustrate a perspective view, front view and plane view showing the positional relationship between the magnetism collecting protrusions and the magnetic detection unit.
Fig.6 illustrates a cross-sectional view taken along a yz-plane showing the positional relationship between the magnetism collecting protrusions and the magnetic detection unit.
Fig.7(a) to 7(c) are a perspective view, plane view and cross-sectional view showing a configuration of a Hall IC.
Fig.8 illustrates a schematic cross-sectional view for illustrating a magnetic flux detecting operation of a Hall IC.
Fig.9 illustrates a schematic block diagram showing an example of a configuration of a signal processing unit of a Hall IC.
Fig.10 illustrates a graph of a relationship between a leakage flux in the Z direction and a rotation angle of the multipolar magnet.
Fig.11(a) and 11(b) are schematic diagrams showing a relationship between an angle of rotational displacement of torsional deformation of a torsion bar and output of a Hall IC, Fig.11(a) shows the output before subtracting an influence of the leakage flux, and Fig.11(b) shows the output after subtracting the influence of the leakage flux.
Fig.12 illustrates a perspective view showing an arrangement relationship between a Hall IC and magnetism collecting elements in a second embodiment.
Fig.13(a) and 13(b) illustrate a side cross-sectional view and a plane view showing an arrangement relationship between the Hall IC and the magnetism collecting element in the second embodiment.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

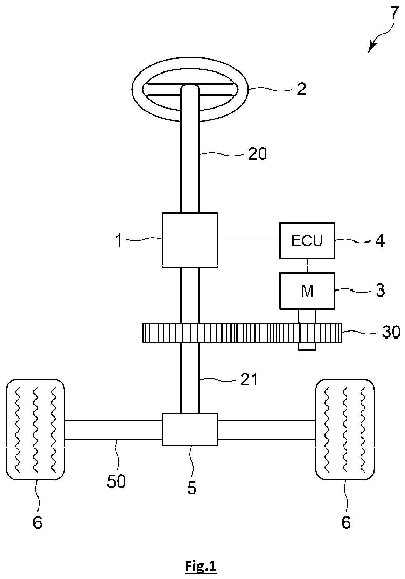

Fig.1 is a schematic diagram showing a configuration example of a steering system according to an embodiment of the invention. A steering system 7 includes a torque sensor 1 for detecting a torque applied to a steering shaft 20 (which is a first shaft) and outputting a detection signal, a steering wheel 2 connected to one end of the steering shaft 20, a motor 3 for outputting a torque to a column shaft 21 (which is a second shaft) via a reduction gear 30 to assist steering of the steering wheel 2 conducted by a driver, an electric control unit (ECU) 4 for controlling the operation of the motor 3 according to the output of the torque sensor 1, a pinion gear 5 for converting rotational motion of the column shaft 21 into linear motion of a rack shaft 50, and wheels 6 connected to the rack shaft 50 via a tie rod (not shown) or the like.

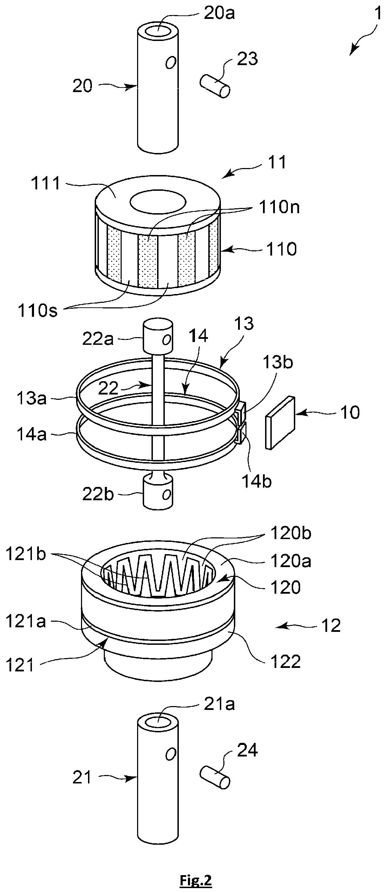

In the above configuration, when the driver rotates the steering wheel 2, the steering shaft 20 connected to the steering wheel 2 rotates. When the steering shaft 20 rotates, the column shaft 21 connected thereto via a torsion bar (22, see Fig.2) rotates. When the column shaft 21 rotates, the rack shaft 50 is displaced via the pinion gear 5 and the angle of a pair of wheels 6 changes according to the displacement amount of the rack shaft 50.

The torque sensor 1 detects the torque of the steering shaft 20 and outputs a detection signal corresponding to the detected torque. When the detection signal of the torque sensor 1 is input, the ECU 4 controls the torque output from the motor 3 in accordance with the detection signal. The rotation of the motor 3 is decelerated by the reduction gear 30 to apply torque to the column shaft 21 to assist the driver in turning the steering wheel 2. It should be noted that the output of the motor 3 may be directly transmitted to the rack shaft 50 without passing through the column shaft 21.

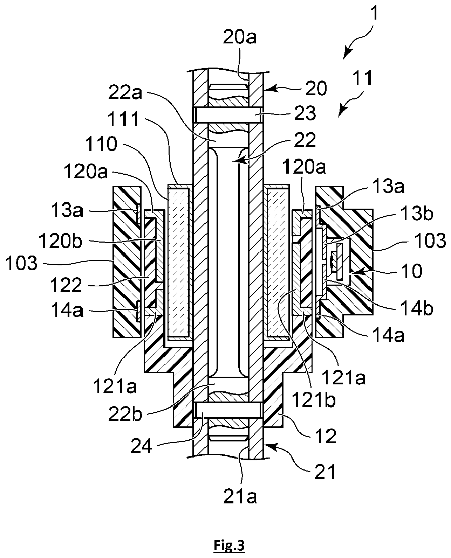

Fig.2 is an exploded perspective view showing a configuration example of the torque sensor 1 of this embodiment. Fig.3 is a cross-sectional view taken along a cross section passing through the central axis of the steering shaft 20, which shows a configuration example of the torque sensor 1.

The torque sensor 1 includes a magnetic detection unit 10 having a Hall IC mounted on a substrate, a cylindrical multipolar magnet portion 11 connected to the steering shaft 20 to be integrally rotated, a magnetic yoke portion 12 disposed within the magnetic field of the multipolar magnet portion 11 and connected to the column shaft 21 to be integrally rotated, and a pair of magnetism collecting plates 13 and 14 magnetically coupled to the magnetic yoke portion 12.

The multipolar magnet portion 11 has a cylindrical multipolar magnet 110. The multipolar magnet 110 is configured by alternately arranging S-poles 110s and N-poles 110n in the circumferential direction. The multipolar magnet 110 is held by a holding cylinder 111 made of a resin. The inner periphery of the holding cylinder 111 is fitted to and held by the outer periphery of the steering shaft 20. The multipolar magnet 110 is rotated integrally with the steering shaft 20. The axis of the multipolar magnet 110 and the axis of the steering shaft 20 coincide with each other.

The multipolar magnet 110 is a permanent magnet formed using a material such as ferrite, samarium cobalt, neodymium or the like. As an example, the magnet has an inner diameter of 20 mm, an outer diameter of 30 mm and a height of 10 mm, and the pitch between the S-poles 110s and the N-poles 110n is 2.5 mm, but the sizes can be appropriately changed in accordance with the size and pitch of a pair of magnetic yokes 120 and 121.

The magnetic yoke portion 12 has the pair of magnetic yokes 120 and 121 made of a soft magnetic material and disposed outside the multipolar magnet 110 in the radial direction. The pair of magnetic yokes 120 and 121 are held by a holding cylinder 122 made of a resin. The inner periphery of the holding cylinder 122 is fitted to and held by the outer periphery of the column shaft 21. The pair of magnetic yokes 120 and 121 are rotated integrally with the column shaft 21. The axes of the pair of magnetic yokes 120 and 121 and the axis of the column shaft 21 coincide with each other. It should be noted that the magnetic yoke portion 12 may be connected to the steering shaft 20, and the multipolar magnet portion 11 may be connected to the column shaft 21.

The pair of magnetic yokes 120 and 121 have annular magnetic yoke bodies 120a and 121a and a plurality of claws 120b and 121b extending in the axial direction from the inner circumferential ends of the magnetic yoke bodies 120a and 121a. The magnetic yoke bodies 120a and 121a are arranged to be separated from each other in the axial direction of the steering shaft 20 and the column shaft 21. Further, the plurality of claws 120b and 121b are arranged at equal intervals in the circumferential direction of the magnetic yoke bodies 120a and 121a, respectively. The respective claws 120b and 121b of the pair of magnetic yokes 120 and 121 are held by the holding cylinder 122 made of a resin so as to be opposed to each other by being alternately arranged to be displaced at a predetermined pitch in the circumferential direction. The claws 120b and 121b face the outer circumferential surface of the multipolar magnet 110.

The pair of magnetism collecting plates 13 and 14 include annular magnetism collecting plate bodies 13a and 14a and magnetism collecting protrusions 13b and 14b which extend from the magnetism collecting plate bodies 13a and 14a respectively so as to face each other with a gap in the axial direction. The pair of magnetism collecting plates 13 and 14, and the magnetic detection unit 10 are held by a holding cylinder 103 made of a resin. The magnetism collecting plate bodies 13a and 14a each do not need to be perfectly annular and may be semi-annular (not limited to 180° and may be any angle) as long as they can collect the magnetic flux of the pair of magnetic yokes 120 and 121. The shape is thus not limited to a circular ring-shape.

The steering shaft 20 and the column shaft 21 are connected via a torsion bar 22. The axes of the steering shaft 20, column shaft 21 and torsion bar 22 coincide with one another. One end 22a of the torsion bar 22 is fitted into a coupling hole 20a of the steering shaft 20 and fixed by using a pin 23 so as to rotate together with the steering shaft 20. Further, the other end 22b of the torsion bar 22 is fitted into a coupling hole 21a of the column shaft 21, and is fixed by using a pin 24 so as to rotate together with the column shaft 21.

When a torque is applied to the steering shaft 20 in accordance with the driver's operation of the steering wheel 2, the torque is transmitted to the column shaft 21 via the torsion bar 22. When the torque is transmitted, torsional deformation occurs on the torsion bar 22 in accordance with the torque. The torsional deformation of the torsion bar 22 causes a relative rotational displacement between the steering shaft 20 and the column shaft 21 in accordance with the torque applied by the driver.

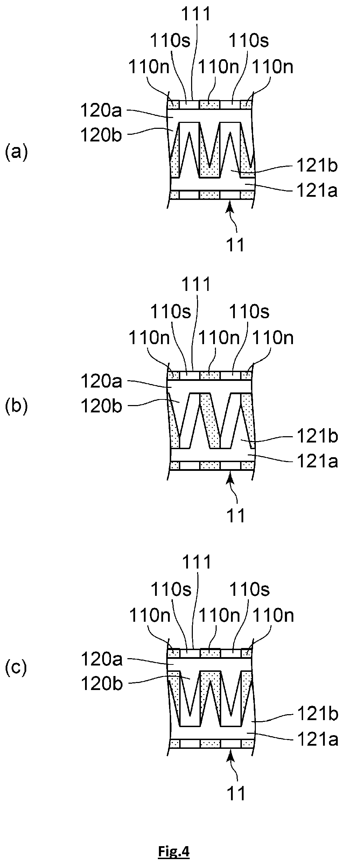

When the relative rotational displacement between the steering shaft 20 and the column shaft 21 occurs, the positional relationship between the claws 120b and 121b of the pair of magnetic yokes 120 and 121 and the S-poles 110s and the N-poles 110n of the multipolar magnet 110 changes as shown in Figs.4(a) to 4(c). Figs.4(a) to 4(c) are front views showing the positional relationship between the pair of magnetic yokes 120 and 121 and the S-poles 110s and the N-poles 110n of the multipolar magnet 110.

When there is no relative rotational displacement between the steering shaft 20 and the column shaft 21, that is, when no torque is applied to the steering shaft 20 and the torsion bar 22 is not twisted, the positional relationship between the pair of magnetic yokes 120 and 121 and the multipolar magnet 110 is as shown in Fig.4(b). Although a magnetic field is generated in the claws 120b and 121b of the magnetic yokes 120 and 121 in this state, no magnetic flux is generated between the magnetic yoke bodies 120a and 121a.

In addition, when relative rotational displacement between the steering shaft 20 and the column shaft 21 occurs, that is, when torque is applied to the steering shaft 20 and the torsion bar 22 is twisted, the positional relationship between the pair of magnetic yokes 120 and 121 and the multipolar magnet 110 is as shown in Fig.4(a) when the steering wheel 2 is rotated clockwise and as shown in Fig.4(b) when the steering wheel 2 is rotated counterclockwise. In the case of Fig.4(a) and the case of Fig.4(b), magnetic fields of magnetic poles opposite to each other are generated in the claws 120b and 121b of the magnetic yokes 120 and 121 and positive or negative magnetic flux is generated between the magnetic yoke bodies 120a and 121a.

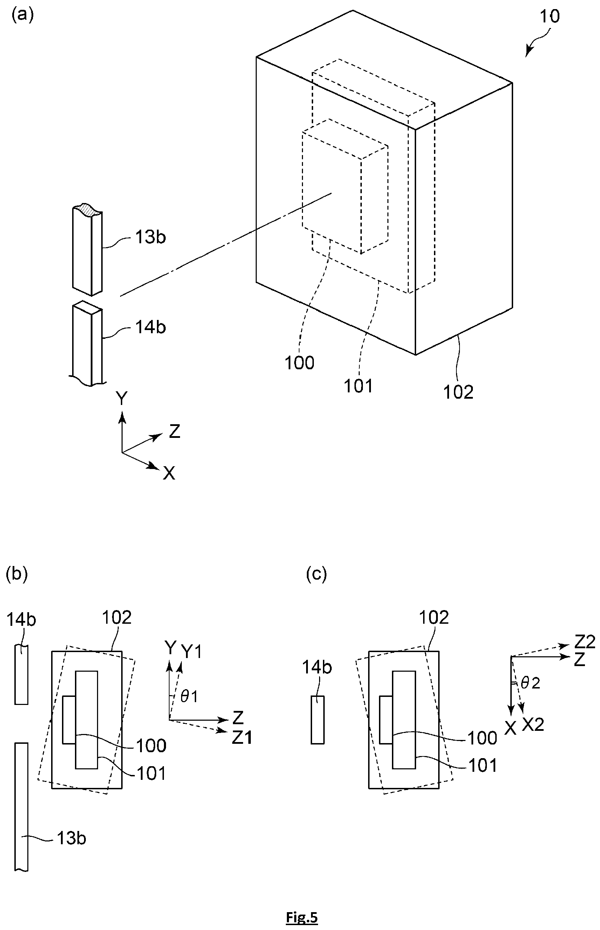

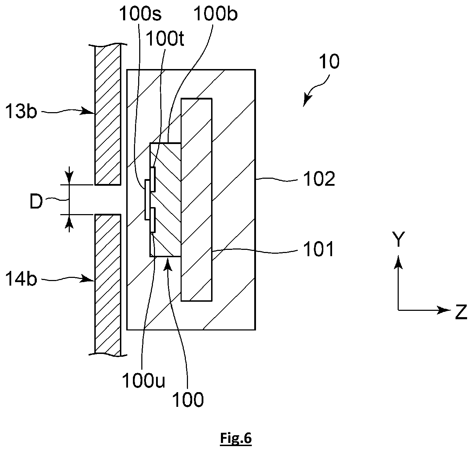

Magnetic field lines of the magnetic yokes 120 and 121 are collected by the magnetism collecting plates 13 and 14, respectively. The magnetic flux generated between the magnetic yoke bodies 120a and 121a is collected between the magnetism collecting protrusions 13b and 14b. The magnetic flux between the magnetism collecting protrusions 13b and 14b is detected by the magnetic detection unit 10. Figs.5 and 6 show the positional relationship between the magnetism collecting protrusions 13b and 14b and the magnetic detection unit 10.

Figs.5(a) to 5(c) are a perspective view, front view and plane view showing a positional relationship between the magnetism collecting protrusions 13b and 14b and the magnetic detection unit 10. Fig.6 is a cross-sectional view taken along a YZ plane showing the positional relationship between the magnetism collecting protrusions 13b and 14b and the magnetic detection unit 10.

The magnetic detection unit 10 includes a Hall IC 100 having Hall plates 1001, 100r, 100u, and 100t and a magnetic concentrator 100s, which is a soft magnetic material plate provided so as to overlap the four Hall plates 1001, 100r, 100u and 100t in an XY plane, a substrate 101 on which the Hall IC 100 is subject to surface mounting, and a sealing material 102 for moulding the Hall IC and the substrate 101. The magnetic detection unit 10 detects the magnetic flux density in each of three directions x, y, and z. It should be noted that the sealing material 102 may be omitted according to the specifications and the installation situation of the torque sensor 1.

The magnetism collecting protrusions 13b and 14b are provided with a distance D in the gap between the tips thereof. The magnetic detection unit 10 is disposed such that the centre of the XY plane coincides with the position of the gap between the magnetism collecting protrusions 13b and 14b. The gap has a gap axis coinciding with the Y axis. The distance between the magnetic detection unit 10 and the magnetism collecting protrusions 13b and 14b may be as small as possible. The magnetic detection unit and the protrusions may be in contact with each other, because the smaller the distance between the magnetic detection unit 10 and the magnetism collecting protrusions 13b and 14b is, the greater the magnetic flux density to be detected becomes. The distance D can be set independently of the thicknesses of the Hall IC 100, substrate 101 and sealing material 102 and may be smaller than the thicknesses of the Hall IC 100, substrate 101 and sealing material 102. As an example, the distance D is set to 2 mm.

In the magnetic detection unit 10 the magnetic detection surface should ideally be parallel to the XY plane. However, in case the magnetic detection surface has a placement error of angle θ₁ in the YZ plane view, as shown in Fig.5(b), the magnetic detection unit 10 detects the magnetic fluxes in the Y1 direction and Z1 direction. Further, if the magnetic detection surface has a placement error of angle θ₂ in the ZX plane view, as shown in Fig.5(c), the magnetic detection unit 10 detects magnetic fluxes in the Z2 direction and X2 direction. As will be described in detail later, a leakage flux in the Z direction is added to the detection magnetic fluxes in the Y1 direction and X2 direction due to the above placement error.

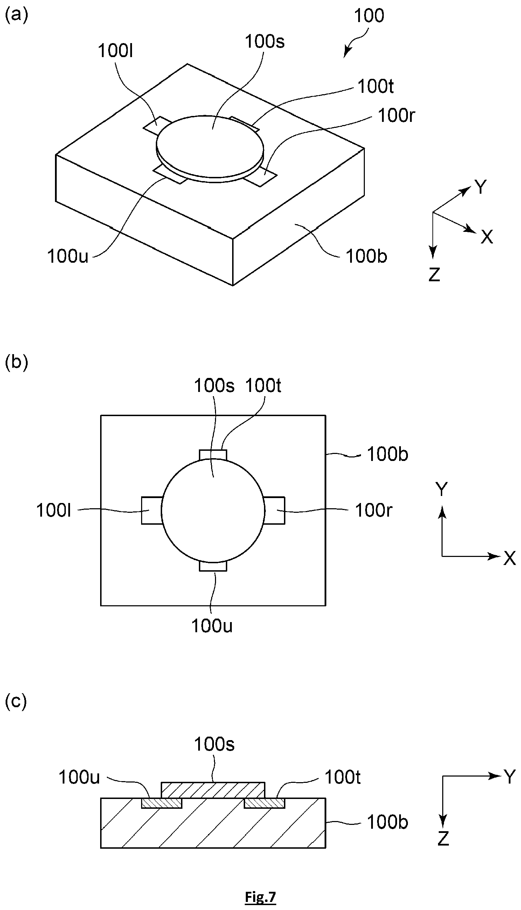

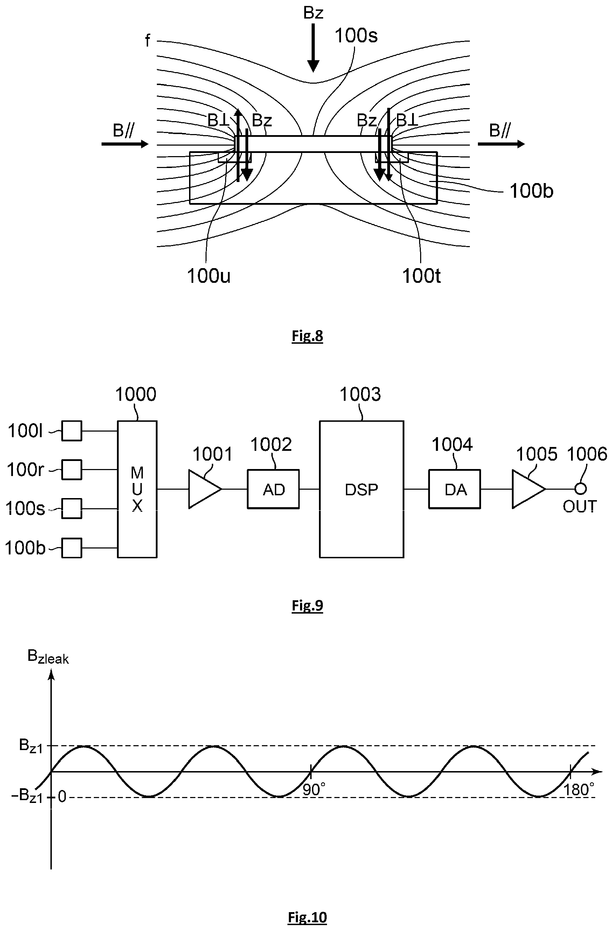

Figs.7(a) to 7(c) offer a perspective view, plane view and cross-sectional view showing the configuration of the Hall IC 100. The Hall IC 100 includes a substrate 100b, a pair of Hall plates 100u and lOOt and a pair of Hall plates 1001 and 100r. The Hall plates are provided on the substrate 100b and have detection surfaces parallel to the surface of the substrate 100b. The detecting directions of the Hall plates as magnetic detection elements are in a normal direction to the surface of the substrate 100b. The magnetic concentrator 100s is provided on the substrate 100b, so as to partially overlap the Hall plates 100u, 100t, 1001 and 100r, and converts a magnetic flux parallel to the surface of substrate 100b into a normal direction to allow the Hall plates 100u, 100t, 1001 and 100r to detect the converted magnetic flux. A signal processing unit (1000 to 1006, see Fig.9) processes signals output from the Hall plates 100u, 100t, 1001 and 100r, thereby detecting the magnetic flux densities in both parallel and normal directions to the substrate 100b by signal processing described next.

Fig.8 is a schematic cross-sectional view for illustrating the magnetic flux detecting operation of the Hall IC 100. Representatively, the magnetic flux detection operation of the pair of the Hall plates 100u and lOOt will be described. Obviously, the same applies to the pair of the Hall plates 1001 and 100r. In the Hall IC 100 the Hall plates 100u and lOOt detect the magnetic flux density in the vertical direction in the drawing. Thus, when the horizontal direction component in the drawing of the magnetic flux f is B//(By) and the vertical direction component in the drawing is Bz, the Hall plate 100u detects "B⊥ - Bz" and the Hall plate 100t detects "-B⊥ - Bz", since the drawing horizontal direction component B// is induced by the magnetic concentrator 100s and detected as B⊥. Therefore, the signal processing unit of the Hall IC 100 outputs a signal proportional to the magnetic flux density 2B⊥ based on the difference between the outputs of the Hall plates 100u and 100t, and outputs a signal proportional to the magnetic flux density -2Bz based on the sum of the outputs of the Hall plates 100u and 100t. In the present embodiment the Hall IC 100 primarily detects the drawing horizontal direction component B//(By) of the magnetic flux f and outputs the signal proportional to the magnetic flux density 2B⊥(By) based on the difference between the outputs of the Hall plates 100u and 100t to the ECU 4.

For the Hall IC 100 the distance between the Hall plates 100u and 100t and that between the Hall plates 1001 and 100r is for example 0.5 mm, the thickness of the substrate 100b is 1.5 mm, the width in the y direction is 4.1 mm and the width in the x direction is 3 mm. For the magnetic concentrator 100s permalloy can be used.

Fig.9 is a schematic block diagram showing an example of the configuration of the signal processing unit of the Hall IC 100. The Hall IC 100 includes a multiplexer (MUX) 1000 for sequentially transmitting signals output from the Hall plates 100u, 100t, 1001, and 100r to the subsequent stages, an amplifier 1001 for amplifying signals, an AD conversion unit 1002 for converting analog signals into digital signals, a digital signal processor (DSP) 1003 for processing digital signals, a D/A conversion unit 1004 for converting digital signals into analog signals, an amplifier 1005 for amplifying the signals and an output unit 1006 for outputting the signals to the ECU 4.

The DSP 1003 sequentially receives the outputs of the Hall plates 100u, 100t, 1001 and 100r from the multiplexer 1000. The DSP calculates a signal proportional to the magnetic flux density 2B⊥ in the Y direction from the difference between the outputs of the Hall plates 100u and lOOt and a signal proportional to the magnetic flux density of -2Bz from the sum of the outputs of the Hall plates 100u and 100t. Further, the DSP 1003 calculates a signal proportional to the magnetic flux density 2B⊥ in the X direction from the difference between the outputs of the Hall plates 1001 and 100r and a signal proportional to the magnetic flux density of -2Bz from the sum of the outputs of the Hall plates 1001 and 100r. Further, the DSP 1003 calculates the leakage flux in the Z direction from these intermediate calculation results and obtains the torsion angle of the torsion bar 22 by subtracting the influence in the Y1 direction of the leakage flux in the Z direction from the magnetic flux density in the Y1 direction (see Fig.5(b)). In order to describe the calculation method of the influence in the Y1 direction of the leakage flux, the relationship between the leakage flux in the Z direction and the rotation angle of the multipolar magnet 110 will be described below.

Fig.10 is a graph showing the relationship between the leakage flux in the Z direction and the rotation angle of the multipolar magnet 110. As the multipolar magnet 110 rotates, the S-poles 110s and the N-poles 110n alternately pass opposite to the magnetic detection surface of the magnetic detection unit 10 to generate a leakage flux B_{Zleak} in the Z direction. The magnetic detection unit 10 detects the leakage flux B_{Zleak}.

In accordance with the number n of pairs of S-poles 110s and N-poles 110n of the multipolar magnet 110, the leakage flux B_{Zleak} periodically changes with the amplitude as B_{Z1}, and B_{Zleak} = B_{z1}·sin(nθ) is satisfied. The phase may be determined according to the starting point of the rotation direction of the multipolar magnet 110. This is shown in Fig.10.

When there is a placement error as in Fig.5(b), a leakage flux in the Z direction equal to B_{Zleak}·sinθ₁ is added to the magnetic flux density in the Y1 direction, which is the actual detection direction of the magnetic detection unit 10.

In addition, a leakage flux in the Z direction B_{Zleak}·sinθ₂ is added to the magnetic flux density in the X2 direction, which is the actual detection direction of the magnetic detection unit 10 having the placement error as in Fig.5(c). That is, θ₁ is obtained from the ratio between the magnetic flux density Bz1 (= B_{zleak}·cosθ₁) in the Z1 direction and the magnetic flux density By1 (= B_{zleak}·sinθ₁) in the Y1 direction (θ₁ = arctan(By1/Bz1)), which are detected by rotating the steering wheel 2 so as not to cause torsional deformation in the torsion bar 22. Therefore the DSP 1003 calculates θ₁ in the calibration operation. Further, θ₂ is obtained from the ratio between the magnetic flux density Bz2 (= B_{zleak}·cosθ₂) in the Z2 direction and the magnetic flux density Bx2 (= B_{zleak}·sinθ₂) in the X2 direction (θ₂ = arctan(By2/Bz2)), which are detected by rotating the steering wheel 2 regardless of the torsional deformation of the torsion bar 22. Therefore the DSP 1003 calculates θ₂ in the calibration operation. Here, since the leakage flux density in the Z direction satisfies B_{zleak} = Bz2/cosθ₂, the DSP 1003 detects Bz2, thereby obtaining the leakage flux density B_{zleak} in the Z direction from the calculated θ₂. That is, even if the rotation angle θ of the multipolar magnet 110 is unknown, the leakage flux density B_{zleak} in the Z direction can be obtained.

Since the leakage flux in the Z direction added to the magnetic flux density in the Y1 direction satisfies B_{Zleak}·sinθ₁ = Bz1·sinθ₁/cosθ₂, the DSP 1003 obtains θ₁ and θ₂ by the above method, and detects Bz2 to obtain a leakage flux in the Z direction added to the magnetic flux density in the Y1 direction.

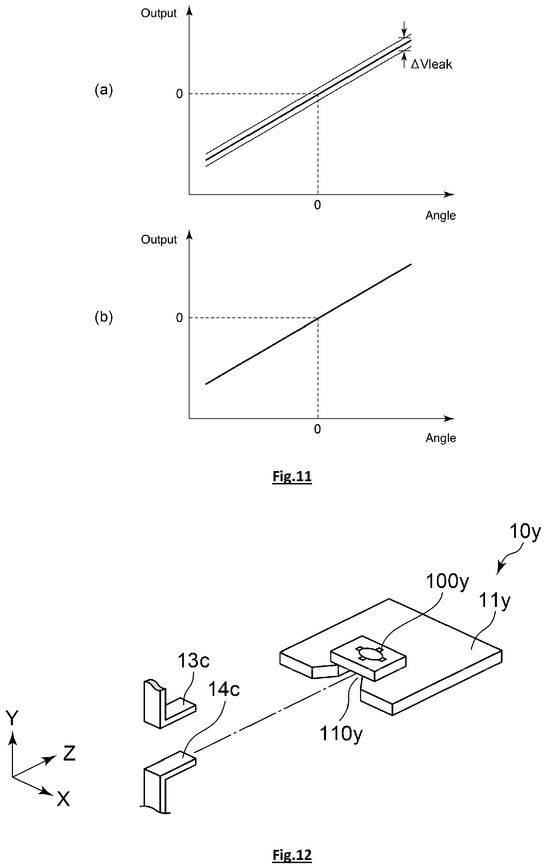

Figs.11(a) and 11(b) are schematic diagrams showing the relationship between the angle of the rotational displacement of the torsional deformation of the torsion bar 22 and the output of the Hall IC 100. Fig.11(a) shows the output before subtraction of the influence of the leakage flux, and Fig.11(b) shows the output after subtraction of the influence of the leakage flux.

As described in Figs.4(a) to 4(c), in the case where the torsion bar 22 is not twisted, the positional relationship between the pair of magnetic yokes 120 and 121 and the multipolar magnet 110 is as shown in Fig.4(b), so that no magnetic flux is generated between the magnetic yoke bodies 120a and 121a. Therefore, when the leakage flux is ignored, the output of the Hall IC 100 corresponds to the case where the magnetic flux density satisfies By = 0.

Further, when a torque is applied to the steering shaft 20 and the torsion bar 22 is twisted, a positive or negative magnetic flux is generated between the magnetic yoke bodies 120a, 121a, since the positional relationship between the pair of magnetic yokes 120 and 121 and the multipolar magnet 110 is as shown in Fig.4(a) or 4(b), depending on the direction of twisting. Therefore, when the leakage flux is ignored, the output of the Hall IC 100 corresponds to the case where the magnetic flux is positive or negative.

Since an output proportional to the magnitude of magnetic flux is obtained between Fig.4(a) and Fig.4(b), and between Fig.4(b) and Fig.4(c), the relationship between the angle of torsional deformation of the torsion bar 22 and the output of the Hall IC 100 is proportional when the magnetic flux density By in the Y direction is ideally detected. This is indicated by the solid line in Fig.11(a). On the other hand, when the Hall IC 100 detects the magnetic flux density By1 in the Y1 direction deviated by θ₁ from the Y direction, the magnetic flux density By1 (= B_{zleak}·sinθ₁) in the Y1 direction of the leakage flux B_{zleak} is added. Hence, the relationship includes a width satisfying ΔVₗₑₐₖ ∝ 2B_{z1}.

As described with reference to Figs.5(b) and 5(c), the DSP 1003 of the Hall IC 100 calculates θ₁ and θ₂ in the calibration operation and obtains the leakage flux density B_{zleak} in the Z direction and the leakage flux in the Z direction added to the magnetic flux density in the Y1 direction by detecting the magnetic flux density Bz2 in the X2 direction. Then a voltage is output proportional to the torsion angle by subtracting a component of the leakage flux in the Z direction added to the magnetic flux density in the Y1 direction, that is, by subtracting a component of ΔVₗₑₐₖ, as shown in Fig.11(b).

According to the above embodiment, not only the magnetic flux density in the Y direction (Y1 direction) necessary for detecting the torsion angle of the torsion bar 22, but also the magnetic flux densities in the X direction (X2 direction) and the Z direction (Z1 direction and Z2 direction) are detected. Since the signal processing for suppressing the influence of the leakage flux density in the Z direction on the magnetic flux density in the Y1 direction is performed by the DSP 1003, even when the angle θ₁ and the angle θ₂ are observed as the placement errors of the magnetic detection unit 10, as shown in Figs.5(b) and 5(c), the influence of the leakage flux B_{Zleak} of the multipolar magnet portion 11 added to the magnetic flux density in the Y1 direction is suppressed and a signal proportional to the torsion angle of the torsion bar 22 can be output as shown in Fig.11(b). That is, the influence of the placement error of the magnetic detection element on the detection sensitivity of the magnetic flux can be suppressed.

Moreover, since the normal direction of the detection surface of the conventional Hall IC is the magnetism sensing direction, it is necessary to sandwich the Hall IC between the magnetism collecting plates. It is however made possible to detect the magnetic flux between the magnetism collecting protrusions 13b and 14b by using the Hall IC 100 capable of detecting also a magnetic flux parallel to the detection surface in the present embodiment. Thus, the distance between the magnetism collecting protrusions 13b and 14b can be made narrower than at least the thickness of the Hall IC 100. That is, it becomes possible that the thicknesses of the Hall IC 100 and materials of the substrate 101, the sealing material 102, etc. for mounting the Hall IC 100 do not affect the sensitivity for detecting the magnetic flux generated between the magnetic yoke bodies 120a and 121a.

Further, since the distance between the magnetism collecting protrusions 13b and 14b can be made narrower than the thickness of the Hall IC 100, the magnetic flux density between the magnetism collecting protrusions 13b and 14b increases and the sensitivity of the torque sensor 1 can be improved. In addition, since the magnetic flux density between the magnetism collecting protrusions 13b and 14b increases, the multipolar magnet 110 can be downsized or thinned for achieving the same sensitivity as in prior art solutions.

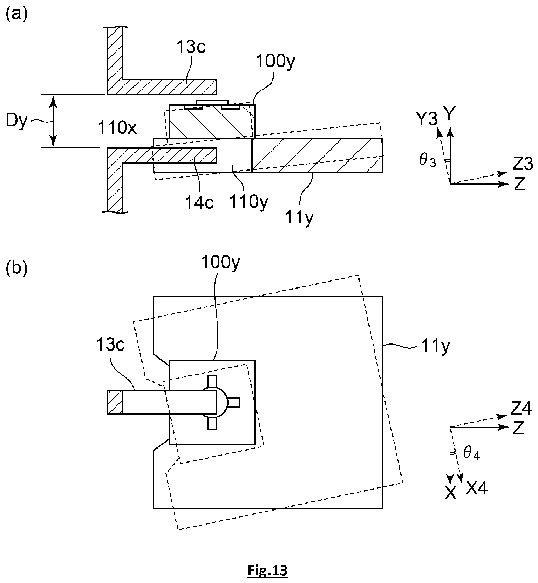

Further, since there is no need to provide the magnetism collecting protrusions 13c and 14c extending in the radial direction (Figs.12 and 13) and the Hall IC 100 is arranged with the normal line of the detection surface in the radial direction of the steering shaft 20, the size of the torque sensor 1 in the radial direction can be suppressed as compared with the conventional size.

It is to be noted that since the distance between the magnetism collecting protrusions 13b and 14b is made small, assemble accuracy for the Hall IC 100 becomes required; however, the assembling error may be eliminated by providing the Hall IC 100 with a correction function in the signal processing unit. For example, the correction function performs the correction by programming of the optimum value of the sensitivity and the offset in the signal processing unit of the Hall IC 100. Alternatively, after mounting the Hall IC 100 to the torque sensor 1, the torsion bar 22 is twisted to the right and left, and the sensitivity and the offset are determined from the magnetic flux density at that time, and then correction is performed by programming in the signal processing unit of the Hall IC 100.

Another embodiment is now considered, which is different from the previously described embodiment in that it employs magnetism collecting protrusions which originally have been used with conventional Hall ICs without magnetic concentrator, whose magnetism sensing direction is normal to the detection surface only. Further, in the considered embodiment, the Hall IC, capable of detecting the magnetic flux density in three directions, is arranged with the normal line of the detection surface in the Y direction.

Since the normal line of the detection surface of the Hall IC is set in the Y direction, the illustration of Fig.8 is changed by replacing Bz with By and B// with Bz or Bx. In addition, when there is no particular description or explanation, this embodiment has the same configuration as that of the previously described embodiment. The same configuration will be described using the same reference numerals.

Fig.12 is a perspective view showing an arrangement relationship between the Hall IC and the magnetism collecting element in the considered embodiment. Figs.13(a) and 13(b) are a side cross-sectional view and a plane view showing the arrangement relationship between the Hall IC and the magnetism collecting element in the second embodiment.

A magnetic detection unit 10y employs a Hall IC 100y having the same configuration as that of the Hall IC 100 as previously described and changes the arrangement posture of the Hall IC 100y. The magnetic detection unit 10y has a configuration in which the normal line of the detection surface is set in the Y direction. The magnetic detection unit 10y includes the Hall IC 100y having the Hall plates 1001, 100r, 100u and 100t. The magnetic concentrator 100s is a soft magnetic material plate provided so as to overlap these Hall plates on the ZX plane. A substrate 11y has a surface on which the Hall IC 100y is mounted. The Hall IC 100y of the magnetic detection unit 10y detects the magnetic flux density in each of the three directions x, y, and z.

The magnetism collecting protrusions 13c and 14c have a gap of distance Dy between the tips thereof as shown in Fig.12 and Figs.13(a) and 13(b). The Hall IC 100y is disposed so that its center in the ZY plane coincides with the position of the gap of the magnetism collecting protrusions 13c and 14c. A notch 110y is provided in the substrate 11y and the magnetism collecting protrusion 14c of the magnetism collecting element is arranged in the space formed by the notch 110y so that the minimum value of the distance Dy between the magnetism collecting protrusions 13c and 14c of the magnetism collecting element is made to be the thickness of the magnetic detection unit 10y (for example, 1.5 mm). The space has an axis comprising the centre point of the gap and directed in the Z-direction.

The magnetic detection surface of the Hall IC 100y should be parallel to the ZX plane ideally. However, the case is considered where the Hall IC 100y has a placement error of angle θ₃ in the YZ plane view, as shown in Fig.13(a). The magnetic detection unit 10y detects magnetic fluxes in the Y3 direction and the Z3 direction. Further, the Hall IC 100y has a placement error of ang le θ₄ in the ZX plane view, as in Fig.13(b). The magnetic detection unit 10y detects the magnetic fluxes in the Z4 direction and the X4 direction. The leakage flux in the Z direction is added to the detection magnetic fluxes in the Y direction and the X direction due to the above placement error.

When there is a placement error as shown in Fig.13(a), a leakage flux B_{Zleak}·sinθ₃ in the Z direction is added to the magnetic flux density in the Y3 direction, which is the actual detection direction of the magnetic detection unit 10y. Further, as shown in Fig.13(b), a leakage flux B_{Zleak}·sinθ₄ in the Z direction is added to the magnetic flux density in the X4 direction, which is the actual detection direction of the magnetic detection unit 10y having that placement error. That is, θ₃ is obtained from the ratio between the magnetic flux density Bz3 (= B_{zleak}·cosθ₃) in the Z3 direction and the magnetic flux density By3 (= B_{zleak}·sinθ₃) in the Y3 direction (θ₃ = arctan(By3/Bz3)), which are detected by rotating the steering wheel 2 so as not to cause torsional deformation in the torsion bar 22. Therefore the DSP 1003 calculates θ₃ in the calibration operation. The angle θ₄ is obtained from the ratio between the magnetic flux density Bz4 (= B_{zleak}·cosθ₄) in the Z4 direction and the magnetic flux density Bx4 (= B_{zleak}·sinθ₄) in the X4 direction (θ₄ = arctan(By2/Bz4)), which are detected by rotating the steering wheel 2 regardless of the torsional deformation of the torsion bar 22. Therefore the DSP 1003 calculates θ₄ in the calibration operation.

Here, since the leakage flux density in the Z direction satisfies B_{zleak} = Bz4/cosθ₄, the DSP 1003 calculates the leakage flux density B_{zleak} in the Z direction from the calculated θ₄ by detecting Bz4. That is, even if the rotation angle θ of the multipolar magnet 110 is unknown, the leakage flux density B_{zleak} in the Z direction can be obtained.

Since the leakage flux in the Z direction added to the magnetic flux density in the Y3 direction satisfies B_{Zleak}·sinθ₃ = Bz3·sinθ₃/cosθ₄, the DSP 1003 obtains θ₃ and θ₄ by the above method and detects Bz4, so as to obtain the leakage flux in the Z direction added to the magnetic flux density in the Y3 direction.

According to the above embodiment, by employing the Hall IC 100y of the present invention, even the torque sensor having the conventional magnetism collecting protrusion like the magnetism collecting protrusions 13c and 14c, detects not only the magnetic flux density in the direction necessary for detecting the torsion angle of the torsion bar 22, but also the magnetic flux density in all three directions as in the firstly described embodiment. Since the DSP 1003 is adapted to perform the signal processing so as to determine the output from the magnetic flux densities in all three directions, the influence of the leakage flux of the multipolar magnet portion 11 on the magnetic flux density in the direction necessary for detecting the torsion angle can be suppressed, even when the angle θ₃ and the angle θ₄ are observed as the placement error of the magnetic detection unit 10 (see Figs.13(a) and 13(b)). That is, the influence of the placement error of the magnetic detection element on the detection sensitivity of the magnetic flux can be suppressed.

It should be noted that the present invention is not limited to the above described embodiments. Various modifications are possible without departing from the scope of the present invention. The materials and shapes of the sensor, yoke, magnetism collecting plate and magnet according to the above-described embodiments are merely examples and may be appropriately selected and used as a newly changed combination within a range where the functions of torque detection are not impaired and the gist of the present invention is not changed.

For example, as a modification example of the Hall ICs 100 and 100y, magnetic concentrators may be further arranged at both ends of the Hall plates 100u and 100t and the Hall plates 1001 and 100r, respectively. The magnetic concentrators that are further provided, induce the magnetic flux parallel to the detection surface to the Hall plates 100u and lOOt and the Hall plates 1001 and 100r by using such a Hall IC. The sensitivity of the torque sensor 1 can thereby be improved.

Further, as a modification example of the Hall ICs 100 and 100y, the magnetic concentrator 100s may not be circular and may have an elliptical shape with a long axis in the y direction or a rectangular shape with the longitudinal direction in the y direction. Further a cross shape or any other shape can be selected in order to induce the magnetic flux parallel to the detection surface to the Hall plates 100u and 100t.

Also, as a modification example of the Hall ICs 100 and 100y, a Hall IC may be employed which is configured to have magnetic concentrators provided on the substrate so as to make the Hall plates 100u and lOOt and the Hall plates 1001 and 100r arranged without being spaced at the centre of the substrate, so that they are sandwiched between the magnetic concentrators from the outside and whereby the Hall plates 100u and lOOt and the Hall plates 1001 and 100r partially overlap the magnetic concentrators. The magnetic flux is thereby converted in a direction going direct with the normal direction into the normal direction so as to allow the Hall plates 100u and 100t and the Hall plates 1001 and 100r to detect the magnetic flux. The magnetic concentrators provided on the outside of the Hall plates induce the magnetic flux parallel to the detection surface to the Hall plates by using such a Hall IC, so that the sensitivity of the torque sensor 1 can be improved.

Similarly to B_{zleak} which is the leakage flux in the Z direction, Bₓₗₑₐₖ, i.e. the leakage flux in the X direction, may be taken into consideration. When the Hall IC 100 or 100y is disposed with a rotation error around an axis in the Z direction, since Bₓₗₑₐₖ affects the Y1 or Y2 direction, this influence is subtracted. As a result, even when there is a placement error of rotation around the axis extending in the Z direction of the magnetic detection unit 10, the influence of the leakage flux in the X direction of the multipolar magnet portion 11 on the magnetic flux density in the direction necessary for detecting the torsion angle can be suppressed.

Further, the torque sensor 1 does not need to include all of the magnetic detection unit 10, multipolar magnet portion 11, magnetic yoke portion 12, and magnetism collecting plates 13 and 14, and only a part (for example, only the magnetic detection unit 10 and the magnetism collecting plates 13 and 14, or only the magnetic detection unit 10 and the magnetic yoke portion 12) may be supplied as a product.

Further, the magnetism collecting protrusions 13b and 14b of the magnetism collecting plates 13 and 14 can be eliminated by providing the magnetic concentrator on the detection surface of the Hall IC instead of the magnetism collecting protrusions 13b and 14b (see e.g. Fig.2).

### Reference signs list:

1: torque sensor
2: steering wheel
3: motor
4: ECU
5: pinion gear
6: wheel
7: steering system
10: magnetic detection unit
11: multipolar magnet portion
12: magnetic yoke portion
13: magnetism collecting plate
14: magnetism collecting plate
20: steering shaft
21: column shaft
22: torsion bar
23: pin
24: pin
30: reduction gear
50: rack shaft
100: Hall IC
101: substrate
102: sealing material
103: holding cylinder
110: multipolar magnet
111: holding cylinder
120: magnetic yoke
121: magnetic yoke
122: holding cylinder
1000: multiplexer
1001: amplifier
1002: AD conversion unit
1003: DSP
1004: DA conversion unit
1005: amplifier
1006: output unit

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A torque sensor (1) comprising:
- a multipolar magnet (110) rotated with a first shaft (20);
- a pair of magnetic yokes (120,121) rotated together with a second shaft (21) connected to said first shaft (20) via a torsion bar (22) and disposed in a magnetic field of said multipolar magnet,
- a pair of magnetism collectors (13,14) having a pair of magnetism collector bodies (13a,14a) to collect lines of magnetic field of said pair of magnetic yokes respectively and having a pair of protrusions (13b,14b) that each extend from the pair of magnetism collector bodies to form a gap, said gap having an axis comprising a centre point of said gap and being in a direction wherein said gap between said pair of protrusions is smallest and
- a magnetic detection unit (10) disposed so as to face the gap between the pair of protrusions, a normal line to said magnetic detection unit being in a radial direction of said gap axis, and so as not to overlap the pair of protrusions in a plane, wherein a normal line of said plane is in the direction of said gap axis, said magnetic detection unit (10) arranged to detect a magnetic flux related to said pair of magnetic yokes between the pair of protrusions, while aiming at making a normal line of a detection surface coincide with the radial direction of said gap axis, said magnetic detection unit having magnetic detection directions of at least a normal direction of the detection surface and a direction perpendicular to the normal direction of the detection surface, and outputting a signal corresponding to a magnetic flux density obtained by determining a ratio according to an angle of deviation between the radial direction of said gap axis and the normal direction of the detection surface, and by subtracting a value obtained by multiplying a detection magnetic flux density in the normal direction of the detection surface by the ratio, from a detection magnetic flux density in the direction of said gap axis.

2. Torque sensor as in claim 1, wherein the magnetic detection unit includes at least a pair of Hall plates arranged at an interval in the direction of said gap axis, and a magnetic concentrator provided between the pair of Hall plates so as to overlap a part of each of the pair of Hall plates in a plane view in the normal direction of the detection surface.

3. Torque sensor as in claim 1, wherein the magnetic detection unit includes at least a pair of Hall plates arranged side by side in the direction of said gap axis, and a magnetic concentrator provided at each end of the pair of Hall plates in the axial direction of the first shaft so as to overlap a part of each of the pair of Hall plates in a plane view in the normal direction of the detection surface.

4. Torque sensor as in any of claims 1 to 3, wherein the multipolar magnet has S-poles and N-poles alternately arranged at a predetermined pitch in a circumferential direction of the first shaft; and the pair of magnetic yokes are arranged to be shifted from each other in the circumferential direction by the predetermined pitch.

5. A torque sensor (1) comprising:
- a multipolar magnet (110) rotated with a first shaft (20),
- a pair of magnetic yokes (120,121) rotated together with a second shaft (21) connected to the first shaft (20) via a torsion bar (22) and disposed in a magnetic field of the multipolar magnet
- a pair of magnetism collectors (13,14) having a pair of magnetism collector bodies (13a,14a) that collect lines of magnetic field of the pair of magnetic yokes respectively and having a pair of protrusions (13c,14c) that each extend from each of the pair of the magnetism collector bodies to form a space; said space having an axis comprising a centre point of said space and being in a direction normal to the direction wherein said space between said pair of protrusions is smallest, said pair of protrusions extending in parallel with said axis of said space and
- a magnetic detection unit (10) disposed in the space between the pair of protrusions and so as to overlap the pair of protrusions in a plane view to detect a magnetic flux in the space between the pair of protrusions, a normal line of the plane being in said direction wherein said space between said pair of protrusions is smallest, while aiming at making a normal line of a detection surface coincide with said direction wherein said space between said pair of protrusions is smallest, and having magnetic detection directions of at least a normal direction of the detection surface and a direction perpendicular to the normal direction of the detection surface, and outputting a signal corresponding to a magnetic flux density obtained by determining a ratio according to an angle of deviation between the direction of said axis of said space and the direction perpendicular to the normal direction of the detection surface, and by subtracting a value obtained by multiplying a detection magnetic flux density in the direction perpendicular to the normal direction of the detection surface by the ratio, from a detection magnetic flux density in said direction wherein said space between said pair of protrusions is smallest.

6. Torque sensor as in claim 5, wherein the magnetic detection unit includes at least a pair of Hall plates arranged at an interval in the direction of said axis of said space ; and a magnetic concentrator provided between the pair of Hall plates so as to overlap a part of each of the pair of Hall plates in a plane view in the normal direction of the detection surface.

7. Torque sensor as in claim 5, wherein the magnetic detection unit includes at least a pair of Hall plates arranged side by side in the radial direction of the first shaft; and a magnetic concentrator provided at each end of the pair of Hall plates in the said direction wherein said space between said pair of protrusions is smallest so as to overlap a part of each of the pair of Hall plates in a plane view in the normal direction of the detection surface.

8. The torque sensor according to any one of claims 5 to 7, wherein the multipolar magnet has S-poles and N-poles alternately arranged at a predetermined pitch in a circumferential direction of the first shaft, and the pair of magnetic yokes are arranged to be shifted from each other by the predetermined pitch in the circumferential direction.
